# EUROPÄISCHE PATENTSCHRIFT

(11) **EP 2 655 086 B1**
(45) Veröffentlichungstag und Bekanntmachung des Hinweises auf die Patenterteilung: **03.07.2019**
(21) Anmeldenummer: 11819065.1
(22) Anmeldetag: 12.12.2011
(51) Int. Cl.: B60B 21/02, B60B 3/04

(54) **FAHRZEUGRAD FÜR NUTZFAHRZEUGE**
VEHICLE WHEEL FOR COMMERCIAL VEHICLES
ROUE POUR VÉHICULES UTILITAIRES

(30) Priorität: 23.12.2010 DE 102010056419; 22.06.2011 DE 202011102515 U
(43) Veröffentlichungstag der Anmeldung: 30.10.2013
(73) Patentinhaber: Accuride Wheels Solingen GmbH, 42697 Solingen (DE)
(72) Erfinder: BÜCHEL, Hans-Heiner, 53639 Königswinter (DE); SCHUMACHER, Jörg, 41844 Wegberg (DE)
(74) Vertreter: Meissner, Peter E.
(86) Internationale Anmeldenummer: PCT/DE2011/002164
(87) Internationale Veröffentlichungsnummer: WO 2012/095079

(56) Entgegenhaltungen:
- EP-A1- 1 106 388
- EP-A1- 2 374 631
- CN-U- 201 544 706

## Beschreibung

Die Erfindung betrifft ein Fahrzeugrad für Nutzfahrzeuge, mit einer 15°-Steilschulterfelge für schlauchlose Reifen und einer mit der Steilschulterfelge verbundenen Radschüssel, wobei die Steilschulterfelge ein Felgentiefbett, eine äußere Felgenschulter, ein zylindrisches Übergangsteil (Ledge), das zwischen dem Felgentiefbett und der äußeren Felgenschulter angeordnet ist, aufweist und wobei zwischen zylindrischen Übergangsteil und der äußeren Felgenschulter ein Felgenabschnitt mit einer Übergangsschräge vorhanden ist, in dem ein Ventilloch zur Aufnahme des Ventils vorgesehen ist.

Unter Nutzfahrzeugen sind in dieser Erfindung Fahrzeuge zum Transport schwerer Lasten oder Passagiere angezogen, die mit einer Steilschulterfelge ausgestattet sind. Dies sind z.B. neben LKW auch Trailer (Anhänger oder Auflieger) oder Busse.

Derartige gestaltete Fahrzeugräder, deren Ventil außen liegt, d.h. deren Ventilschaft zwecks Befüllung des Reifens mit Luft nicht durch das Belüftungsloch der Schüssel geführt wird , werden abgekürzt als ALV-Räder bezeichnet.

LKW-Räder mit außenliegendem Ventil sind beispielsweise aus der EP 0701911 B1 oder der EP 1 106 388 B1 bekannt, wobei gemäß der EP 0701911 B1 ein Hump vorgesehen ist. Ein Hump ist ein auf der Fahrzeugschulter umlaufender Höcker, der verhindern kann, dass sich der Reifen in Richtung Tiefbett bewegt, wenn der Reifen Luft verliert. Bei ALV-Rädern gemäß o.a. Patent dient der Hump im Wesentlichen zum Schaffen des notwendigen Bauraums zur Aufnahme des Ventils in radialer Richtung.

In den letzten Jahren treten bei ALV-Rädern im Feld Erscheinungen auf, die auf eine zunehmende Belastung der Felge speziell im Übergangsbereich zwischen Hump und Ledge schließen lässt.

Bei der Ausführung nach der EP 1106 388 B1 ist zwar kein Hump vorgesehen, aber ein sog. Sicherheitsbereich, also ein im Wesentlichen zylindrischer Abschnitt (Miniledge) zwischen der äußeren Felgenschulter und einer Übergangsschräge zum zylindrischen Übergangsteil (Ledge).

Die EP 2036742 A1 zeigt eine Hump-freie ALV-Konstruktion. Hierbei besteht die Felge aber ausschließlich aus (mit der Vorderseite beginnend) folgenden Elementen: Horn, vordere oder äußere Felgenschulter, Ledge, Tiefbett, hintere Felgenschulter, Horn. Das Ventil kann hierbei in dem Bereich zwischen Mitte des Reifensitzes bis zum Anfangsradius des Felgentiefbettes eingefügt sein. Hierbei ist der Ventilsitz lokal in die Felgengeometrie eingeprägt.

Diese Konstruktion hat aber Nachteile, und zwar:
- Durch die Prägung kann der angrenzende Reifensitz- oder Ledgebereich partiell deformiert werden
- Der Reifenfuß kann durch das exponiert liegende Ventil beschädigt werden.
- Die Durchmesser für Ledge und Tiefbett sind durch das fehlende Übergangselement relativ groß was zu einem Mehrgewicht von Felge und Schüssel führt

LKW-Scheibenräder unterliegen einem Trend nach immer größerer Tragfägkeit bei gleichzeitig verbesserter Radlebensdauer und reduziertem Gewicht.

Es ist daher die Aufgabe der Erfindung, diese Nachteile zu beseitigen und unter Beibehaltung der außenliegenden Ventillage die Felgenkontur zu verändern.

Weiterhin soll der Möglichkeit zur weiteren Reduzierung der Radgewichte bzw. einer Erhöhung der Tragkraft Rechnung getragen werden.

Gelöst wird diese Aufgabe erfindungsgemäß mit einem Fahrzeugrad für Nutzfahrzeuge, mit einer 15°-Steilschulterfelge für schlauchlose Reifen und einer mit der Steilschulterfelge verbundenen Radschüssel, wobei die Steilschulterfelge ein Felgentiefbett, eine äußere Felgenschulter, ein zylindrisches Übergangsteil (Ledge), das zwischen dem Felgentiefbett und der äußeren Felgenschulter angeordnet ist, aufweist und wobei zwischen zylindrischen Übergangsteil und der äußeren Felgenschulter ein Felgenabschnitt mit einer Übergangsschräge vorhanden ist, in dem ein Ventilloch zur Aufnahme des Ventils vorgesehen ist,
dadurch, dass die Übergangsschräge, die zwischen dem zylindrischen Übergangsteil und der äußeren Felgenschulter ausgebildet ist, in mehr als einen Abschnitt unterteilt ist und aus vier ineinander übergehenden Radien besteht und ohne Hump direkt in die äußere Felgenschulter übergeht und das Ventilloch in einem der Abschnitte der Übergangsschräge angeordnet ist.

Die Erfindung kann auf alle Nutzfahrzeug-Räder mit 15°-Steilschulter-Tiefbettfelge angewendet werden.

Durch die Erfindung kann die Radlebensdauer verbessert, das Problem der starken Belastung im Humpbereich gelöst und gleichzeitig neue Potentiale für eine weitere Gewichtsreduzierung -erschlossen werden.

Die Vorteile der erfindungsgemäßen Lösung, bei der somit kein Hump vorgesehen ist, lassen sich wie folgt zusammenfassen:
- der Hump-Bereich ist durch seine geometrische Form sehr steif und kann sich hierdurch aufgrund der lokalen Spannungskonzentration negativ auf die Radlebensdauer auswirken. Durch die Erfindung wird der Bereich spannungstechnisch unkritischer
   - durch den Platzbedarf des Humps in axialer Richtung muss die Schüsselhöhe verhältnismäßig hoch ausgeführt werden, was sich aufgrund langjähriger Erfahrung negativ auf die Gesamt- Bauteilfestigkeit auswirkt und ebenfalls das Radgewicht erhöht. Durch die Erfindung kann die Schüsselhöhe deutlich reduziert werden, was sich positiv auf die Lebensdauer auswirkt.
   - durch den Platzbedarf des Humps in axialer Richtung und die ETRTO-Vorgaben zur Gestaltung des Tiefbettes bleibt nur ein enger begrenzter Bauraum für die Schüsselanbindung am Ledge übrig. Diese begrenzten Platzverhältnisse im Ledge sind nicht ideal für die Schüsselanbindung insbesondere bei Maulweiten kleiner 9". Durch die Erfindung kann der Tragbereich der Radschüssel verlängert werden, welches erfahrungsgemäß bei hochausgelasteten Rädern zur Verbesserung der Radlebensdauer führen kann.
   - durch den Platzbedarf des Humps in axialer Richtung sowie den notwendigen Bauräumen für den Schüsseltragbereich sowie der Schweißnaht zwischen Radschüssel und Felge verbleibt nur ein begrenzter Bauraum für die Ausführung des vorderen Tiefbettradius. Durch die Erfindung kann der gewonnene Bauraum zur weicheren Ausgestaltung des vorderen Tiefbettradius genutzt werden, was sich ebenfalls positiv auf die Radlebensdauer auswirkt. Ebenso kann die Tiefbettkontur verbreitert werden, was zu einer weiteren Gewichtsreduzierung führt.

Die Erfindung zeichnet sich durch folgende Geometrie aus:
Die Felge besteht beginnend mit der Vorderseite aus folgenden rotationssymmetrischen Elementen: Horn, vordere Felgenschulter, Übergangsschräge zum Ledge zur Unterbringung des Ventils, Ledge, Tiefbett, hintere Felgenschulter, Horn.

Durch den Wegfall des Humps und der dadurch wegfallenden lokalen Versteifung mit verbundener Spannungskonzentration wird die Radlebensdauer im Bereich des Ventils und des Anbindebereiches zwischen Schüssel und Felge verbessert.

Anstelle der beim Standard-ALV-Rad im oberen Humpradius beginnenden Schräge dient erfindungsgemäß der Übergangsbereich zwischen vorderer Felgenschulter und Ledge zur optimalen Aufnahme des Ventils und stellt sicher, dass durch die Prägung der Ventillochplanfläche die angrenzenden Bereiche (Felgenschulter + Ledge) nicht übermäßig verquetscht werden und somit keine Reifensitz- bzw. Undichtigkeitsprobleme sowie Beschädigungen am Reifenfuß auftreten.

Hinsichtlich der Schräge des Übergangsbereiches sind verschiedene Lösungen denkbar. 45° ist ideal, da hierbei die existierenden 45°-Ventile weitergenutzt werden könnten und der Bauraumbedarf in axialer Richtung gering ausfällt. Lösungen mit anderen Winkeln der Übergangsschräge größer 15° (vgl. Maßgebung des Winkels der Ventillochschräge in ETRTO) sind ebenso denkbar; z.B. würde eine Lösung mit 30° zu einer weicheren und damit für die Felge spannungstechnisch besseren Ausgestaltung der Übergangsradien führen.

Des weiteren kann durch die radial geschützte Lage des Ventils eine problemlose Reifenmontage und -demontage gewährleistet werden ohne dass die Gefahr besteht, den Reifenfuß durch ein hervorstehendes Ventil zu beschädigen.

Der Wegfall des Humps führt ebenso zu einer wesentlich verbesserten manuellen Reifendemontage, da der Reifenfuß im drucklosen Zustand nicht mehr über den Hump gepresst werden muss.

Durch den Wegfall des Humps kann die Radschüssel wesentlich weiter vorne in der Felge angebunden werden, wodurch die axiale Länge der Radschüssel (Schüsselhöhe) reduziert werden kann, was sich günstig auf die Radlebensdauer auswirkt. Des weiteren kann durch die reduzierte Schüsselhöhe das Schüsselgewicht reduziert werden.

Ebenso kann durch den in axialer Richtung gewonnenen Bauraum bei stark ausgelasteten Rädern die Pressfläche zwischen Schüsselrand und Felge (Vergrößerung der Schüssellappenlänge) erhöht werden, was sich positiv auf die Radlebensdauer auswirkt. Je nach Konstruktion kann ebenso der gewonnene Bauraum zur Verbreiterung des Tiefbettes genutzt werden, was ebenfalls zu einer Gewichtsreduzierung des Rades führt.

Die Erfindung soll nachfolgend an Ausführungsbeispielen erläutert werden, wobei in den beiden Figuren schematisch ein Querschnitt durch ein Fahrzeugrad dargestellt ist.

Der Kern der Erfindung zeichnet sich durch folgende Geometrie aus. Die Felge besteht beginnend mit der Vorderseite oder Außenseite (Schüssel-Anbindeseite) aus folgenden Elementen: Horn, vordere oder äußere Felgenschulter, Übergangsschräge/ Übergangsstrecke zum Ledge zur Unterbringung des Ventils, Ledge, Tiefbett, hintere oder innere Felgenschulter, Horn.

Durch den Wegfall des Humps und der dadurch wegfallenden lokalen Versteifung mit verbundener Spannungskonzentration wird die Radlebensdauer im Bereich des Ventils und deren angrenzender Radien sowie im Anbindebereich zwischen Schüssel und Felge deutlich verbessert.

Anstelle des Humps dient der Übergangsbereich zwischen vorderer Felgenschulter und Ledge zur optimalen Aufnahme des Ventils.

Die Schräge des umlaufenden Verbindungselementes zwischen Felgenschulter und Ledge kann ggf. mit verschiedenen Winkeln >15° oder in einander übergehenden Radien gestaltet werden, um die Spannungen in den Übergangsbereichen zu reduzieren. Der gewonnene Platz durch den Wegfall des Humps gibt hierfür neuen Gestaltungsraum.

Die Erfindung soll nachfolgend unter Bezug auf die Zeichnungen erläutert werden.

Dabei zeigt:
Fig.1 schematisch eine Felge und die
Fig. 2 die Ausbildungen der Übergangsschräge.

Im Einzelnen sind die Felgenabschnitte, und zwar von der Radaußenseite zur Radinnenseite gesehen bezeichnet mit:
1 äußeres Horn, 2 äußere Felgenschulter, 3 Übergangsschräge, 4 zylindrisches Übergangsteil (Ledge), 5 Tiefbett, 6 innere Felgenschulter und 7 inneres Horn. 8 bezeichnet das Ventilloch mit dem angedeuteten Ventil 9.

An den zylindrischen Übergangsteil 4 angeschweißt ist der Rand 10 der Radschüssel 11, von der noch der Bereich bis zum Bolzenloch 12 dargestellt ist.

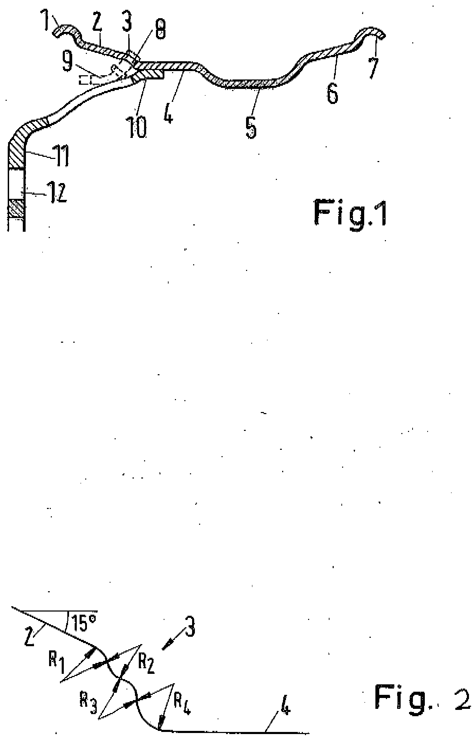

Ersichtlich ist in Fig.1 die Ausbildung der Übergangsschräge 3 unter einem Winkel von 45°, wobei die Übergangsschräge direkt, also ohne Hump in die äußere Felgenschulter übergeht.

In der Figur 2 sind vier Radien dargestellt, wobei es aber auch ersichtlich ist, dass der Radius 1 direkt in die äußere Felgenschulter 2 übergeht, also kein Hump vorhanden ist.

## Patentansprüche

1. Fahrzeugrad für Nutzfahrzeuge, mit einer 15°-Steilschulterfelge für schlauchlose Reifen und einer mit der Steilschulterfelge verbundenen Radschüssel (11), wobei die Steilschulterfelge ein Felgentiefbett (5), eine äußere Felgenschulter (2), ein zylindrisches Übergangsteil (Ledge) (4), das zwischen dem Felgentiefbett (5) und der äußeren Felgenschulter (2) angeordnet ist, aufweist und wobei zwischen zylindrischem Übergangsteil (4) und der äußeren Felgenschulter (2) ein Felgenabschnitt mit einer Übergangsschräge (3) vorhanden ist, in dem ein Ventilloch (8) zur Aufnahme des Ventils (9) vorgesehen ist, wobei die Übergangsschräge (3), die zwischen dem zylindrischen Übergangsteil (4) und der äußeren Felgenschulter (2) ausgebildet ist, in mehr als einen Abschnitt unterteilt ist und und ohne Hump direkt in die äußere Felgenschulter (2) übergeht und das Ventilloch (8) in einem der Abschnitte der Übergangsschräge (3) angeordnet ist, **dadurch gekennzeichnet, dass** die Übergangsschräge (3) aus vier ineinander übergehenden Radien (R1, R2, R3, R4) besteht.

2. Fahrzeugrad nach Anspruch 1,
**dadurch gekennzeichnet,**
**dass** die Übergangsschräge einen Winkel von >15° aufweist.

## Claims

1. A vehicle wheel for commercial vehicles, having a 15° tapered bead seat rim for tubeless tyres and a wheel disc (11) connected to the tapered bead seat rim, wherein the tapered bead seat rim has a drop centre (5), an outer bead seat (2), a cylindrical transition part (ledge) (4), which is arranged between the drop centre (5) and the outer bead seat (2), and wherein a rim portion, with a transition incline (3), is present between cylindrical transition part (4) and the outer bead seat (2), in which rim portion there is provided a valve hole (8) for receiving the valve (9), wherein the transition incline (3), between the cylindrical transition part (4) and the outer bead seat (2), is divided into more than one portion and without hump transitions directly into the outer bead seat (2) and the valve hole (8) is arranged in one of the portions of the transition incline (3), **characterised in that** the transition incline (3) is composed of four radiuses (R1, R2, R3, R4) transitioning into one another.

2. A vehicle wheel according to claim 1, **characterised in that** the transition incline has an angle of >15°.

## Revendications

1. Roue de véhicule pour véhicules utilitaires, avec une jante à talon incliné de 15° pour pneus sans chambre à air et une clé de roue (11) reliée à la jante à talon incliné, dans laquelle la jante à talon incliné présente une base creuse de jante (5), un talon de jante extérieur (2), une partie de transition cylindrique (Ledge) (4), qui est agencée entre la base creuse de jante (5) et le talon de jante extérieur (2) et dans laquelle une section de jante avec un chanfrein de transition (3) est présente entre la partie de transition cylindrique (4) et le talon de jante extérieur (2), dans lequel un trou de valve (8) est prévu pour la réception de la valve (9), dans laquelle le chanfrein de transition (3), qui est réalisé entre la partie de transition cylindrique (4) et le talon de jante extérieur (2), est subdivisé en plus d'une section et passe directement dans le talon de jante extérieur (2) sans bosse et le trou de valve (8) est agencé dans une des sections du chanfrein de transition (3), **caractérisée en ce que** le chanfrein de transition (3) se compose de quatre rayons (R1, R2, R3, R4) passant l'un dans l'autre.

2. Roue de véhicule selon la revendication 1,
**caractérisée en ce**
**que** le chanfrein de transition présente un angle > 15°.
